# EUROPÄISCHE PATENTSCHRIFT

(11) **EP 1 104 439 B1**
(45) Veröffentlichungstag und Bekanntmachung des Hinweises auf die Patenterteilung: **26.07.2006**
(21) Anmeldenummer: 99942897.2
(22) Anmeldetag: 20.08.1999
(51) Int. Cl.: C07K 14/655

(54) **VERFAHREN ZUR HERSTELLUNG VON BIOSTATIN (TT-232 TRIACETAT) UND SEINE ANALOGA**
METHOD FOR PRODUCING BIOSTATIN (TT-232 TRIACETATE) AND ANALOGS THEREOF
PROCEDE DE PRODUCTION DE BIOSTATINE (TRIACETATE TT-232) ET DE SES ANALOGUES

(30) Priorität: 20.08.1998 WO PCT/EP98/05306
(43) Veröffentlichungstag der Anmeldung: 06.06.2001
(73) Patentinhaber: ORPEGEN Pharma Gesellschaft für biotechnologische Forschung, Entwicklung und Produktion m.b.H., 69115 Heidelberg (DE)
(72) Erfinder: BRAUM, Günther, D-69214 Eppelheim (DE); LIFFERTH, Axel, D-69207 Sandhausen (DE); BIRR, Christian, D-69151 Neckargemünd (DE)
(74) Vertreter: Böhm, Brigitte
(86) Internationale Anmeldenummer: PCT/EP1999/006131
(87) Internationale Veröffentlichungsnummer: WO 2000/011032

(56) Entgegenhaltungen:
- EP-A- 0 017 536
- EP-A- 0 505 680
- CHEMICAL ABSTRACTS, vol. 128, no. 19, 11. Mai 1998 (1998-05-11) Columbus, Ohio, US; abstract no. 230702, H UNO & S KANAOKA: "preparation of cyclic peptides" XP002103315 & JP 10 067796 A (SUMITOMO) 10. März 1998 (1998-03-10)
- M KAKIUCHI ET AL.: "Amino acids and peptides. XXVII. Solid phase synthesis of fibrinogen-related peptides with disulfide bond formed on solid support" CHEMICAL AND PHARMACEUTICAL BULLETIN., Bd. 44, Nr. 5, Mai 1996 (1996-05), Seiten 1107-1110, XP002103313 TOKYO JP
- C GARCIA-ECHEVERRIA ET AL.: "Convenient synthesis of a cyclic peptide disulfide: a type II beta-turn structural model" TETRAHEDRON LETTERS., Bd. 30, Nr. 18, 1989, Seiten 2441-2444, XP002103314 OXFORD GB

## Beschreibung

Die vorliegende Erfindung betrifft ein Verfahren zur Synthese von Biostatin mittels Peptidsynthese in Lösung.

Zur Synthese von Peptiden sind dem Fachmann verschiedene Verfahren bekannt. Es handelt sich dabei zum einen um Flüssigphasenmethoden, welche auf Shemyakin (Tetrahedron Lett. (1965), 2323 f.) zurückgehen, und zum anderen um Festphasenverfahren, welche erstmals von Merrifield (R.B. Merrifield, J. Am. Chem. Soc. 85 (1963) 2149) beschrieben wurden.

Die Verfahren der Festphasen- und Flüssigphasensynthese sind seither weiterentwickelt und erheblich verbessert worden, es wird hierzu beispielsweise auf "Peptide, Chemie und Biologie", Hans Dieter Jakubke, Spektrum Akademischer Verlag Heidelberg-Berlin-Oxford, 1996, ISBN 3-8274-0000-7 verwiesen. Dieses Lehrbuch beschreibt Methoden der klassischen als auch der Merrifield-Peptid-Synthese. Derzeit wird zur Peptidsynthese in erster Linie die Peptidsynthese in Lösung angewandt. Insbesondere bei der Synthese von Peptiden, welche mindestens eine Disulfidbrücke ausbilden sollen, besteht im Hinblick auf die Synthese in Lösung allerdings der der Methode inhärente Nachteil, daß diese Disulfidbrücke durch Oxidation in hoher Verdünnung gebildet werden muß. Dies ist im klassischen Verfahren der Peptidsynthese in Lösung nötig, um die erforderliche örtliche Trennung der einzelnen Reaktionszentren zu bewirken und damit eine effektive Cyclisierung zu ermöglichen.

Das Peptid Biostatin (TT-232) ist ein Analogon des Somatostatins und weist starke in vitro und in vivo Antitumoraktivität auf.

Somatostatin ist ein natürlich vorkommendes Tetradecapeptid, welches die Bildung von Wachstumshormon und die Sekretion weiterer endokriner Moleküle, wie z.B. Glucagon, Insulin und Gastrin, inhibiert. Somatostatin inhibiert oder reguliert einige Zellfunktionen und es wurde darüber hinaus festgestellt, daß es wichtige endogene antiproliferative Aktivität entfaltet. Es wurde außerdem ein inhibitorischer Effekt von Somatostatin und seinen Analoga auf Tumoren gezeigt. In den letzten Jahren wurden einige Somatostatinanaloga entwickelt, welche längere Wirkungszeiten als das native Hormon und bessere Antitumorwirksamkeit aufweisen. Es wurde daher viel Mühe aufgewandt, tumorselektive Somatostatinanaloga zu entwickeln, wobei insbesondere auch die leichte Herstellbarkeit eine Rolle spielt.

Eines dieser Analoga ist ein Molekül mit einer 5-Ringstruktur mit der folgenden Sequenz:
D-Phe-Cys-Tyr-D-Trp-Lys-Cys-Thr-NH₂.

Das Molekül wurde TT-232 bzw. Biostatin genannt. Dieses Somatostatinanalogon hat praktisch keinen inhibitorischen Effekt auf die Wachstumshormonsfreisetzung, zeigt aber starke Antitumorwirksamkeit in vivo und in vitro und induziert die Apoptose. Die Verbindung inhibiert die Tyrosinkinase-Aktivität verschiedener menschlicher Darmtumorzellinien, wobei diese Inhibition sehr gut mit der beobachteten Inhibition der Zellproliferation übereinstimmte.

Die Herstellung von Octa- bzw. Heptapeptid-Derivaten wird beispielsweise in der EP-A-O 505 680 beschrieben. Dort wird aber für eine effektive Cyclisierung über die beiden Cystein-Reste das Peptid zuerst von der festen Phase abgetrennt, die Lösung stark verdünnt und dann die Oxidation bewirkt. Diese Art der Herstellung erfordert aber weitere Aufkonzentrations- und Reinigungsschritte.

Aufgabe der vorliegenden Erfindung war es daher, Verfahren bereitzustellen, durch welches Biostatin besonders leicht und mit besonders hoher Ausbeute an freigesetztem Peptidamid nach der Disulfidoxidation erhalten werden kann.

Eine weitere Aufgabe war es, die Herstellung von Biostatin in einer solchen Weise zu ermöglichen, daß eine leichte Aufarbeitung des erhaltenen Produkts erfolgen kann.

Ein Gegenstand der vorliegenden Erfindung ist ein Verfahren zur Synthese von Biostatin (TT-232) mittels Peptidsynthese in Lösung durch stufenweisen Aufbau des Peptids unter Verwendung von mit Schutzgruppen derivatisierten Aminosäuren, wobei die Disulfidbrücke durch Oxidation des vollständig oder teilweise aufgebauten Peptids durch Jod in Gegenwart eines geeigneten Lösungsmittels geschlossen wird und das Biostatin nach Entfernen des Lösungsmittels und gegebenenfalls Waschen des Produkts erhalten wird.

Das erfindungsgemäße Verfahren ermöglicht eine im Vergleich zum Stand der Technik sehr effektive und einfache Herstellung von Biostatin mittels Peptidsynthese in Lösung. Insbesondere bei der bevorzugten Verfahrensführung unter Verwendung von mit Ddz (3,5-Dimethoxybenzyl-α,α-dimethyl-oxycarbonyl oder 2[(3,5-Dimethoxyphenyl)-2-oxycarbonyl]-propyl) als Schutzgruppe derivatisierten Aminosäuren zum Peptidaufbau können hohe Ausbeuten des Produkts auf einfache Weise erhalten werden. Das erfindungsgemäße Verfahren weist außerdem den Vorteil auf, daß nach vollendetem Peptidaufbau in leichter Weise die Oxidation erfolgen kann. Es ist im Rahmen der vorliegenden Erfindung bevorzugt, die Oxidation vor Abspaltung aller Schutzgruppen durchzuführen, allerdings ist eine Verfahrensführung mit Abspaltung der Schutzgruppen vor der Oxidation ebenfalls möglich, auch wenn die Ausbeuten mit dieser Variante etwas geringer sind.

Ein weiterer Gegenstand der vorliegenden Erfindung ist ein Verfahren zur Herstellung von Biostatin (TT-232) mittels Peptidsynthese in Lösung durch stufenweisen Aufbau des Peptids unter Verwendung von mit Schutzgruppen derivatisierten Aminosäuren, wobei die Disulfidbrücke durch Oxidation des vollständig oder teilweise aufgebauten Peptids in Gegenwart eines geeigneten Lösungsmittels vor Abspaltung aller Schutzgruppen geschlossen wird und das Biostatin nach Entfernen des Lösungsmittels und gegebenenfalls Waschen erhalten wird.

Ein besonderer Vorteil des erfindungsgemäßen Verfahrens liegt darin, dass nach erfolgter Oxidation und damit intramolekularem Ringschluß über die beiden Cystein-Reste die Reaktionslösung abgedampft werden kann und auf diese Art und Weise das Produkt erhalten wird. Gegebenenfalls wird das Produkt noch gewaschen, z.B. mit Ether, und danach erneut abgesaugt und getrocknet.

Zur Oxidation können alle auch bisher bereits für in Lösung durchgeführte Verfahren bekannte Oxidationsmittel eingesetzt werden. Geeignete Oxidationsmittel sind dem Fachmann daher bekannt. Beispiele für derartige Oxidationsmittel sind Silber-, Quecksilber- oder Thalliumsalze, Jod, Peroxide oder Sauerstoff. Diese Oxidationsmittel werden in Gegenwart eines geeigneten Lösungsmittels oder Lösungsmittelgemisches angewandt.

Im Rahmen der vorliegenden Erfindung wird besonders bevorzugt als Oxidationsmittel Jod, beispielsweise in essigsaurer Lösung oder in einem Lösungsmittel auf Basis von N,N-Dimethylformamid eingesetzt.

Es ist bevorzugt, als Schutzgruppe für eine oder mehrere Aminosäuren Ddz zu verwenden.

Im erfindungsgemäßen Verfahren sind vorzugsweise die folgenden Syntheseschritte nacheinander durchzuführen:
1. Kopplung von Ddz-geschütztem Cys (Acm) an tert.-Butyl-geschütztes Treonin
2. Ersatz der Schutzgruppe Ddz durch Trifluoressigsäure,
3. Anfügen eines Ddz-geschützten Lysin (Z),
4. Ersatz der Ddz-Schutzgruppe durch Trifluoressigsäure.
5. Anfügung des Ddz-geschützten D-Trp
6. Entfernung der Ddz-Schutzgruppe mit Trifluoressigsäure
7. Anfügung des Ddz-geschützten Tyr (Tbu)
8. Entfernen der Ddz-Schutzgruppe und Ersatz durch Trifluoressigsäure
9. Anfügen des Ddz-geschützten Cys (Acm)
10. Entfernen der Ddz-Schutzgruppe mit Trifluoressigsäure
11. Anfügen des Boc-geschützten D-Phe
12. Ersatz des Boc durch Trifluoressigsäure
13. Oxidation und Aufarbeitung des Produkts durch Abdampfen des Lösungsmittels und Waschen.

In bevorzugten Ausführungsformen wird die Oxidation mit dem voll geschützten Peptid durchgeführt, wogegen in der anderen Ausführungsform in Schritt 11 teilweise bereits die Schutzgruppen entfernt werden, so daß lediglich die Acm-Gruppen am Cystein verbleiben.

Wiederum ein weiterer Gegenstand der vorliegenden Erfindung ist ein Verfahren zur Herstellung von Biostatinen (TT-232) mittels Peptidsynthese in Lösung durch stufenweisen Aufbau des Peptids unter Verwendung von mit Schutzgruppen derivatisierten Aminosäuren, bei denen die Disulfidbrücke durch Oxidation des vollständig oder teilweise aufgebauten Peptids in Gegenwart eines geeigneten Lösungsmittels geschlossen wird und das Biostatin nach Entfernen des Lösungsmittels und gegebenenfalls Waschen erhalten wird, wobei als Schutzgruppen für eine oder mehrere der Aminosäuren Ddz verwendet wird.

Die erfindungsgemäßen Verfahren, welche Gegenstand der vorliegenden Erfindung sind, ermöglichen eine einfache Peptidsynthese in Lösung, bei der sowohl die Oxidation als auch die Aufarbeitung sehr leicht durchzuführen sind. Durch Oxidation des noch tert.-Butyl-geschützten Biostatins wird eine besonders hohe Ausbeute von ca. 70 bis 80 % der Theorie erhalten.

Weitere Ausgestaltungen des erfindungsgemäßen Verfahrens können aus den Beispielen 1 und 2 ersehen werden.

Die folgenden Beispiele sollen die Erfindung weiter erläutern.

### Beispiel 1: Synthese von TT232 in Lösung

### 1. Ddz-Cys(Acm)-Thr(tBu)-NH₂

In einem 1 L-Rundkolben werden 22,8 g (55 mMol) Ddz-Cys(Acm) und 9,32 g (60 mMol) HOBT in 300 mL Ethylacetat gelöst. Zu der gerührten Lösung werden 18,46 g (57,5 mMol) TBTU und 27,45 mL (0,25 Mol) NMM gegeben. Nach weiterem 5 minütigem Rühren erfolgt Zugabe von 8,71 g (50 mMol) Thr(tBu)-NH₂. Es wird über Nacht gerührt. Die Reaktionslösung wird mit 150 mL Benzin versetzt und mit 1 x 100 mL VE-Wasser, 3 x 100 mL ges. NaHCO₃-Lösung, 1 x 100 mL VE-Wasser, 3 x 100 mL 0,1 N HCl, 1 x 100 mL Brine und 1 x 100 mL ges. NaHCO₃-Lösung gewaschen, über 10 g Magnesiumsulfat getrocknet und am Rotationsverdampfer bei ca. 20 mBar und 40°C Wasserbadtemperatur eingedampft. Es werden 25,2 g amorphes Produkt erhalten (Ausbeute: 88 % d.Th.).

### 2. TFA*Cys(Acm)-Thr(tBu)-NH₂

18,3 g (32 mMol) Ddz-Cys(Acm)-Thr(tBu)-NH₂ werden in 200 mL 5 % Trifluoressigsäure in DCM gelöst und 1 h bei RT gerührt. Nach Zugabe von 200 mL Toluol wird am Rotationsverdampfer bei ca. 20 mBar und 40°C Wasserbadtemperatur eingedampft und anschließend mit 100 mL Ethylacetat codestilliert. Der Rückstand wird nach Trocknen im Hochvakuum in einer Mischung aus 30 mL VE-Wasser, 15 mL Ethylacetat und 30 mL Diethylether aufgenommen. Die Phasen werden im Scheidetrichter getrennt, die organische Phase wird noch 2x mit je 10 mL VE-Wasser extrahiert. Die vereinigten Wasserphasen werden mit 3 x 10 mL Ethylacetat/ Diethylether 1 : 2 (v/v) gewaschen und lyophilisiert. Es werden 11,8 g amorphes Produkt erhalten (Ausbeute: 80 % d.Th.).

### 3. Ddz-Lys(Z)-Cys(Acm)-Thr(tBu)-NH₂

In einem Rundkolben werden 12 g (26 mMol) TFA*Cys(Acm)-Thr(tBu)-NH₂, 14,34 g (28,5 mMol) Ddz-Lys(Z) und 4,84 g (31,1 mMol) HOBt in 100 mL Ethylacetat gelöst. Zu der gerührten Lösung werden 9,58 g (29,8 mMol) TBTU und 14,3 mL (0,13 Mol) NMM gegeben. Es wird über Nacht gerührt. Die klare Reaktionslösung wird mit ca. 50 mL Benzin versetzt und mit 1 x 50 mL VE-Wasser, 3 x 50 mL ges. NaHCO₃-Lösung, 1 x 50 mL VE-Wasser, 3 x 50 mL 0,1N HCl, 1 x 50 mL VE-Wasser und 12 x 20 mL 3 % NaCO₃-Lösung gewaschen, über 5 g Magnesiumsulfat getrocknet und am Rotationsverdampfer bei ca. 20 mBar und 40°C Wasserbadtemperatur eingedampft. Es werden 21,9 g glasartig erstarrendes Produkt erhalten (Ausbeute: 100 % d.Th.).

### 4. TFA*Lys(Z)-Cys(Acm)-Thr(tBu)-NH₂

6 g (7,2 mmol) Ddz-Lys(Z)-Cys(Acm)-Thr(tBu)-NH₂ werden in 40 mL 5 % Trifluoressigsäure in DCM gelöst und 1 h bei RT gerührt. Nach Zugabe von 40 mL Toluol wird am Rotationsverdampfer bei ca. 20 mBar und 40°C Wasserbadtemperatur eingedampft und anschließend mit 40 mL DME codestilliert. Der Rückstand wird im Hochvakuum getrocknet. Es werden 3 g Schaum erhalten (Ausbeute: quant.).

### 5. Ddz-D-Trp-Lys(Z)-Cys(Acm)-Thr(tBu)-NH₂

Freisetzung von Ddz-D-Trp aus dem DCHA-Salz:
6,56 g (11 mMol) Ddz-D-Trp*DCHA werden in 20 mL Ethylacetat suspendiert und im Scheidetrichter mit 3 x 20 mL 0,1 N HCl und 2 x 10 mL VE-Wasser gewaschen. Die organische Phase wird über Magnesiumsulfat getrocknet und am Rotationsverdampfer bei ca. 20 mBar und 40°C Wasserbadtemperatur eingedampft.

In einem Rundkolben werden 5,22 g (7,2 mMol) TFA*Lys(Z)-Cys(Acm)-Thr(tBu)-NH₂ das oben erhaltene Ddz-D-Trp und 1,57g (10mMol) HOBT in 40 mL DME gelöst. Zu der gerührten Lösung werden 3,0 g (9,4 mMol) TBTU und 3,4 mL (0,031 Mol) NMM gegeben. Es wird über Nacht gerührt. Die klare Reaktionslösung wird am Rotationsverdampfer bei ca. 20 mBar und 40°C Wasserbadtemperatur eingedampft, in 40 mL Ethylacetat aufgenommen und mit ca. 10 mL Benzin versetzt. Dann wird mit 1 x 20 mL VE-Wasser und 1 x 20 mL 3 % Na₂CO₃-Lösung gewaschen. Das Produkt fällt aus, wird abgesaugt und mit PE/EE 2 : 1 gewaschen. Nach Trocknen im Hochvakuum werden 4,3 g Produkt erhalten (Ausbeute: 65% d.Th.).

### 6. TFA* D-Trp-Lys(Z)-Cys(Acm)-Thr(tBu)-NH₂

11,2 g (11 mMol) Ddz-D-Trp-Lys(Z)-Cys(Acm)-Thr(tBu)-NH₂ werden in 64 mL 5 % Trifluoressigsäure in DCM gelöst und 1 h bei RT gerührt. Nach Zugabe von 64 mL Toluol wird am Rotationsverdampfer bei ca. 20 mBar und 40°C Wasserbadtemperatur eingedampft und anschließend mit 60 mL DME codestilliert. Der Rückstand wird nach Trocknen im Hochvakuum mit Ether verrieben. Der Niederschlag wird abgesaugt und im Hochvakuum getrocknet. Es werden 10 g beiger Feststoff erhalten (Ausbeute: 100 %).

### 7. Ddz-Tyr(tBu)-D-Trp-Lys(Z)-Cys(Acm)-Thr(tBu)-NH₂

Freisetzung von Ddz-Tyr(tBu) aus dem CHA-Salz:
7,38 g (13,2 mMol) Ddz-D-Trp*DCHA werden in 30 mL Ethylacetat suspendiert und im Scheidetrichter mit 3 x 30 mL 0,1 N HCl und 2 x 20 mL VE-Wasser gewaschen. Die organische Phase wird über Magnesiumsulfat getrocknet und am Rotationsverdampfer bei ca. 20 mBar und 40°C Wasserbadtemperatur eingedampft.

In einem Rundkolben werden 10 g (11 mMol) TFA*D-Trp-Lys(Z)-Cys(Acm)-Thr(tBu)-NH₂, das oben erhaltene Ddz-Tyr(tBu) und 2,39 g (15,4 mMol) HOBT in 80 mL N,N'-Dimethylformamid gelöst. Zu der gerührten Lösung werden 4,59 g (14,3 mMol) TBTU und 6 mL (0,055 Mol) NMM gegeben. Es wird über Nacht gerührt. Der Ansatz wird am Rotationsverdampfer bei ca. 40°C Wasserbadtemperatur eingedampft und in 100 mL Ethylacetat aufgenommen. Dann wird mit 1 x 20 mL VE-Wasser, 3 x 30 mL ges. NaHCO₃-Lösung, 1 x 20 mL VE-Wasser, 3 x 30 mL kalter 0,1 N HCl, 1 x 100 mL Brine und 3 x 20 mL 3 % Na₂CO₃-Lösung gewaschen, über ca. 5 g Magnesiumsulfat getrocknet und am Rotationsverdampfer bei ca. 20 mBar und 40°C Wasserbadtemperatur eingedampft. Es werden 11,8 g amorphes Produkt erhalten (Ausbeute: 87 % d.Th.).

### 8. TFA*Tyr(tBu)-D-Trp-Lys(Z)-Cys(Acm)-Thr(tBu)-NH₂

11,8 g (9,5 mmol) Ddz-Tyr(tBu)-D-Trp-Lys(Z)-Cys(Acm)-Thr(tBu)-NH₂ werden in 50 mL 5 % Trifluoressigsäure in DCM gelöst und 1 h bei RT gerührt. Nach Zugabe von 50 mL Toluol wird am Rotationsverdampfer bei ca. 20 mBar und 40°C Wasserbadtemperatur eingedampft und anschließend mit 50 mL DME codestilliert. Der Rückstand wird nach Trocknen im Hochvakuum mit Ether verrieben. Der Niederschlag wird abgesaugt und im Hochvakuum getrocknet. Es werden 10,7 g beiger Feststoff erhalten (Ausbeute: 100 %).

### 9. Ddz-Cys(Acm)-Tyr(tBu)-D-Trp-Lys(Z)-Cys(Acm)-Thr(tBu)-NH₂

In einem Rundkolben werden 4,73 g (11 mMol) Ddz-Cys(Acm), 10,7 g (50 mmol) TFA*Tyr(tBu)-D-Trp-Lys(Z)-Cys(Acm)-Thr(tBu)-NH₂ und 2,07 g (13 mMol) HOBT in 75 mL N,N'-Dimethylformamid gelöst. Zu der gerührten Lösung werden 3,97 g (12,4 mmol) TBTU und 5,2 mL (0,048 Mol) NMM gegeben. Nach Rühren über Nacht wird der Ansatz am Rotationsverdampfer bei ca. 40°C Wasserbadtemperatur eingedampft, in Ethylacetat aufgenommen, und mit 1 x 30 mL VE-Wasser, 3 x 30 mL ges. NaHCO₃-Lösung, 1 x 20 mL VE-Wasser, 3 x 20 mL 0,1 N HCl, 1 x 20 mL VE-Wasser, 3 x 30 mL ges. NaHCO₃-Lösung und 1 x 20 mL VE-Wasser gewaschen, über Magnesiumsulfat getrocknet und am Rotationsverdampfer bei ca. 20 mBar und 40°C Wasserbadtemperatur eingedampft. Es werden 9,3 g Schaum erhalten (Ausbeute: 70 % d.Th.).

### 10. TFA*Cys(Acm)-Tyr(tBu)-D-Trp-Lys(Z)-Cys(Acm)-Thr(tBu)-NH₂

8,9 g (6,3 mMol) Ddz-Cys(Acm)-Tyr(tBu)-D-Trp-Lys(Z)-Cys(Acm)-Thr(tBu)-NH₂ werden in 35 mL 5 % Trifluoressigsäure in DCM gelöst und 1 h bei RT gerührt. Nach Zugabe von 35 mL Toluol wird am Rotationsverdampfer bei ca. 20 mBar und 40°C Wasserbadtemperatur eingedampft und anschließend mit 60 mL DME codestilliert. Der Rückstand wird nach Trocknen im Hochvakuum mit 30 mL Ether verrieben, abgesaugt gewaschen und im Hochvakuum getrocknet. Es werden 6,9 g Feststoff erhalten (Ausbeute: 84 %).

### 11. Boc-D-Phe-Cys(Acm)-Tyr(tBu)-D-Trp-Lys(Z)-Cys(Acm)-Thr(tBu)-NH₂

In einem Rundkolben werden 640 mg (2,4 mMol) Boc-D-Phe, 2,61 g (2 mMol) TFA*Cys(Acm)-Tyr(tBu)-D-Trp-Lys(Z)-Cys(Acm)-Thr(tBu)-NH₂ und 430 mg (2,8 mMol) HOBT in 10 mL N,N'-Dimethylformamid gelöst. Zu der gerührten Lösung werden 830 mg (2,6 mMol) TBTU und 550 µl (10 mMol) NMM gegeben. Nach Rühren über Nacht wird der Ansatz am Rotationsverdampfer bei ca. 40°C Wasserbadtemperatur eingedampft, in Ethylacetat aufgenommen und mit 1 x 10 mL VE-Wasser, 3 x 15 mL ges. NaHCO₃-Lösung, 1 x 10 mL VE-Wasser, 3 x 10 mL 0,1 N HCl, 1 x 10 mL ges. NaHCO₃-Lösung und 1 x 10 mL VE-Wasser gewaschen, über Magnesiumsulfat getrocknet und am Rotationsverdampfer bei ca. 20 mBar und 40°C Wasserbadtemperatur eingedampft. Es werden 2,1 g amorpher Rückstand erhalten (Ausbeute: 73 % d.Th.).

### 12. TFA*D-Phe-Cys(Acm)-Tyr-D-Trp-Lys-Cys(Acm)-Thr-NH₂

1,44g (1 mMol) Boc-D-Phe-Cys(Acm)-Tyr(tBu)-D-Trp-Lys(Z)-Cys(Acm)-Thr(tBu)-NH₂ werden in 7,5 mL Trifluoressigsäure gelöst und 16 h bei RT gerührt. Nach DC-Kontrolle wird in 75 mL Diethylether präzipitiert. Der Niederschlag wird abgesaugt, gewaschen und im Hochvakuum getrocknet. Es werden 1,26 g Pulver erhalten (Ausbeute: 88 %).

### 13. TT-232 Trifluoracetat

In einem 1 L-Rundkolben werden 300 mL Essigsäure (96 %) vorgelegt, 0,215 g (0,15 mMol) TFA*D-Phe-Cys(Acm)-Tyr-D-Trp-Lys-Cys(Acm)-Thr-NH₂ werden unter intensivem Rühren langsam zugegeben. Die Lösung wird mit Argon entgast. Bei 22°C wird über einen Tropftrichter langsam eine Lösung von 92 mg (0,36 mMol) Jod in 6 mL MeOH zugetropft, bis die Reaktionslösung eine dauerhafte, leicht orange Farbe aufweist. Nach 1 h wird so lange eine Lösung von 53 mg (0,3 mMol) Ascorbinsäure in 5 mL VE-Wasser zugegeben, bis die Reaktionslösung entfärbt ist. Die Lösung wird am Rotationsverdampfer bei 40°C Wasserbadtemperatur eingedampft, der Rückstand wird nach Trocknen im Hochvakuum mit 5 mL Ether verrieben, abgesaugt gewaschen und im Hochvakuum getrocknet. Es werden 280 mg Feststoff erhalten (HPLC-Vergleich mit einer Referenz zeigt einen Gehalt von 53 %).

### Beispiel 2

Es wird entsprechend Beispiel 1 verfahren, die Knüpfung der Disulfidbrücke wird jedoch am geschützten Peptid vorgenommen.

### 1. tert Butyl-geschütztes TT232

Zu 100 mL Essigsäure (96 %) werden in einem Rundkolben 72 mg (0,05 mMol)Boc-D-Phe-Cys(Acm)-Tyr(tBu)-D-Trp-Lys(Z)-Cys(Acm)-Thr(tBu)-NH₂ unter intensivem Rühren langsam zugegeben. Die Lösung wird mit Argon entgast. Bei 22°C wird über einen Tropftrichter langsam eine Lösung von 92 mg (0,36 mMol) Jod in 6 mL MeOH zugetropft, bis die Reaktionslösung eine dauerhafte, leicht orange Farbe aufweist. Nach 1 h wird so lange eine Lösung von 53 mg (0,3 mMol) Ascorbinsäure in 5 mL VE-Wasser zugegeben, bis die Reaktionslösung entfärbt ist. Die Lösung wird am Rotationsverdampfer bei 40°C Wasserbadtemperatur eingedampft, der Rückstand wird in 5 mL Ethylacetat und 2 mL VE-Wasser aufgenommen, die organische Phase wird mit 3 x 2 mL ges. NaHCO₃-Lösung, 1 x 2 mL VE-Wasser, 1 x 2 mL 0,1 N HCl und 1 x 10 mL VE-Wasser gewaschen, über Magnesiumsulfat getrocknet und am Rotationsverdampfer bei ca. 20 mBar und 40°C Wasserbadtemperatur eingedampft. Nach Trocknen im Hochvakuum werden 45 mg Rückstand erhalten (Ausbeute: 71 % d.Th.).

### 2. TT232 Trifluoracetat

39 mg (0,03 mMol) tert Butyl-geschütztes TT232 werden in 230 µL Trifluoressigsäure gelöst und 16 h bei RT gerührt. Dann wird am Rotationsverdampfer bei ca. 20 mBar und 40°C Wasserbadtemperatur eingedampft. Der Rückstand wird nach Trocknen im Hochvakuum mit 1 mL Ether verrieben, abgesaugt gewaschen und im Hochvakuum getrocknet. Es werden 33 mg Produkt erhalten (Ausbeute: 77 %).

## Patentansprüche

1. Verfahren zur Herstellung von Biostatin (TT 232) mittels Peptidsynthese in Lösung durch stufenweisen Aufbau des Peptids unter Verwendung von mit Schutzgruppen derivatisierten Aminosäuren,
**dadurch gekennzeichnet,**
**dass** die Disulfidbrücke mittels Oxidation des vollständig oder teilweise aufgebauten Peptids durch Jod in Gegenwart eines geeigneten Lösungsmittels geschlossen wird und das Biostatin nach Entfernen des Lösungsmittels und gegebenenfalls Waschen erhalten wird.

2. Verfahren nach Anspruch 1,
**dadurch gekennzeichnet,**
**dass** die Oxidation vor Abspaltung aller Schutzgruppen durchgeführt wird.

3. Verfahren nach Anspruch 1 oder 2,
**dadurch gekennzeichnet,**
**dass** als Schutzgruppen für eine oder mehrere der Aminosäuren Ddz (3,5-Dimethoxybenzyl-α,α-dimethyloxycarbonyl oder [2(3,5-Dimethoxyphenyl)-2-oxycarbonyl]-propyl) verwendet wird.

4. Verfahren zur Herstellung von Biostatin (TT 232) mittels Peptidsynthese in Lösung durch stufenweisen Aufbau des Peptids unter Verwendung von mit Schutzgruppen derivatisierten Aminosäuren,
**dadurch gekennzeichnet,**
**dass** die Disulfidbrücke durch Oxidation des vollständig oder teilweise aufgebauten Peptids in Gegenwart eines geeigneten Lösungsmittels vor Abspaltung aller Schutzgruppen geschlossen wird und das Biostatin nach Entfernen des Lösungsmittels und gegebenenfalls Waschen erhalten wird.

5. Verfahren nach Anspruch 4,
**dadurch gekennzeichnet,**
**dass** als Schutzgruppen für eine oder mehrere der Aminosäuren Ddz verwendet wird.

6. Verfahren zur Herstellung von Biostatin (TT 232) mittels Peptidsynthese in Lösung durch stufenweisen Aufbau des Peptids unter Verwendung von mit Schutzgruppen derivatisierten Aminosäuren,
**dadurch gekennzeichnet,**
**dass** die Disulfidbrücke durch Oxidation des vollständig oder teilweise aufgebauten Peptids in Gegenwart eines geeigneten Lösungsmittels geschlossen wird und das Biostatin nach Entfernen des Lösungsmittels und gegebenenfalls Waschen erhalten wird, wobei als Schutzgruppen für eine oder mehrere der Aminosäuren Ddz verwendet wird.

## Claims

1. Process for preparing Biostatin (TT 232) by means of peptide synthesis in solution, by synthesizing the peptide stepwise using protective group-derivatized amino acids,
**characterized in that**
the disulphide bridge is closed by means of oxidizing the completely or partially synthesized peptide with iodine in the presence of a suitable solvent and the Biostatin is obtained after removing the solvent and, where appropriate, washing.

2. Process according to Claim 1,
**characterized in that**
the oxidation is carried out before all the protective groups are eliminated.

3. Process according to Claim 1 or 2,
**characterized in that**
Ddz residues (3,5-dimethoxybenyl-α,α-dimethyloxycarbonyl or [2(3,5-dimethoxyphenyl)-2-oxycarbonyl]propyl) are used as protective groups for one or more of the amino acids.

4. Process for preparing Biostatin (TT 232) by means of peptide synthesis in solution, by synthesizing the peptide stepwise using protective group-derivatized amino acids,
**characterized in that**
the disulphide bridge is closed by oxidizing the completely or partially synthesized peptide in the presence of a suitable solvent before eliminating all the protective groups and the Biostatin is obtained after removing the solvent and, where appropriate, washing.

5. Process according to Claim 4,
**characterized in that**
Ddz residues are used as protective groups for one or more of the amino acids.

6. A process for preparing Biostatin (TT 232) by means of peptide synthesis in solution, by synthesizing the peptide stepwise using protective group-derivatized amino acids,
**characterized in that**
the disulphide bridge is closed by oxidizing the completely or partially synthesized peptide in the presence of a suitable solvent and the Biostatin is obtained after removing the solvent and, where appropriate, washing, with Ddz residues being used as protective groups for one or more of the amino acids.

## Revendications

1. Procédé de production de biostatine (TT 232) au moyen de la synthèse peptidique en solution grâce à la constitution progressive du peptide en utilisant des acides aminés dérivés avec des groupes protecteurs, **caractérisé en ce que** le pont disulfide est fermé au moyen de l'oxydation par l'iode du peptide totalement ou partiellement constitué en présence d'un solvant approprié et **en ce que** la biostatine est obtenue après élimination du solvant et le cas échéant après lavage.

2. Procédé selon la revendication 1, **caractérisé en ce que** l'oxydation est effectuée avant l'élimination de tous les groupes protecteurs.

3. Procédé selon la revendication 1 ou 2, **caractérisé en ce que** le Ddz (3,5-diméthoxybenzyl-α,α-diméthyloxycarbonyle ou [2(3,5-diméthoxyphényl)-2-oxycarbonyl]-propyle) est utilisé comme groupe protecteur pour un ou plusieurs des acides aminés.

4. Procédé de production de biostatine (TT 232) au moyen de la synthèse peptidique en solution grâce à la constitution progressive du peptide en utilisant des acides aminés dérivés avec des groupes protecteurs, **caractérisé en ce que** le pont disulfide est fermé par l'oxydation du peptide totalement ou partiellement constitué en présence d'un solvant approprié et **en ce que** la biostatine est obtenue après élimination du solvant et le cas échéant après lavage.

5. Procédé selon la revendication 4, **caractérisé en ce que** le Ddz est utilisé comme groupe protecteur pour un ou plusieurs des acides aminés.

6. Procédé de production de biostatine (TT 232) au moyen de la synthèse peptidique en solution grâce à la constitution progressive du peptide en utilisant des acides aminés dérivés avec des groupes protecteurs, **caractérisé en ce que** le pont disulfide est fermé par l'oxydation du peptide totalement ou partiellement constitué en présence d'un solvant approprié et **en ce que** la biostatine est obtenue après élimination du solvant et le cas échéant après lavage, moyennant quoi le Ddz est utilisé comme groupe protecteur pour un ou plusieurs des acides aminés.
